Europäisches Patentamt

European Patent Office

Office européen des brevets

(11) Numéro de publication: **0 430 780 A1**

## (12) DEMANDE DE BREVET EUROPEEN

(21) Numéro de dépôt: 90403322.2

(22) Date de dépôt: 23.11.90

(51) Int. Cl.5: **B61B 3/00**, E01B 25/24,
B65G 35/06

(30) Priorité: 23.11.89 FR 8915403

(43) Date de publication de la demande:
05.06.91 Bulletin 91/23

(84) Etats contractants désignés:
AT BE CH DE DK ES GB IT LI LU NL SE
Bulletin

(71) Demandeur: **Robin, François**
**10, Cité Chabrol**
**F-63000 Clermont-Ferrand(FR)**

Demandeur: **Rabany, François**
**Chemin des Golettes Chevry**
**F-01170 Gex(FR)**

(72) Inventeur: **Robin, François**
**10, Cité Chabrol**
**F-63000 Clermont-Ferrand(FR)**
Inventeur: **Rabany, François**
**Chemin des Golettes Chevry**
**F-01170 Gex(FR)**

(74) Mandataire: **Peuscet, Jacques et al**
**Cabinet Peuscet 68, rue d'Hauteville**
**F-75010 Paris(FR)**

(54) **Dispositif de transport comportant au moins un élément convoyeur se déplaçant selon un circuit déterminé.**

(57) Le dispositif de transport comporte au moins un élément convoyeur (13) qui se déplace selon un circuit déterminé, par coulissement d'une de ses parties (14) dans un rail de guidage primaire (2), ledit élément convoyeur étant entraîné dans son mouvement par l'intermédiaire d'au moins une chaîne motrice (5) comportant une partie d'entraînement et une partie retour, la partie d'entraînement étant disposée, au moins partiellement, le long et à côté dudit rail de guidage primaire (2), ladite chaîne étant actionnée en circuit fermé par des moyens moteurs.

Ladite chaîne (5) est une chaîne à maillons, l'élément convoyeur (13) étant muni d'une denture (15), qui engrène avec les maillons de ladite chaîne (5) et solidarise en déplacement ladite chaîne (5) et ledit élément convoyeur (13).

Le dispositif de transport comporte une gaine (1) qui comprend intérieurement le rail de guidage primaire (2) juxtaposé aux rails de guidage secondaires d'entraînement (3) et de retour (4) de la chaîne (5).

EP 0 430 780 A1

FIG. 1

FIG. 2

# DISPOSITIF DE TRANSPORT COMPORTANT AU MOINS UN ELEMENT CONVOYEUR SE DEPLACANT SELON UN CIRCUIT DETERMINE.

La présente invention concerne un dispositif de transport comportant au moins un élément convoyeur sse déplaçant selon un circuit déterminé.

De tels dispositifs de transport sont déjà depuis longtemps connus et utilisés, notamment, sur des parcs industriels pour déplacer, à une certaine hauteur au-dessus du sol, d'un poste de travail à un autre, des produits traités à la chaîne. Ces dispositifs comportent, classiquement, un rail de guidage primaire servant de support, dans lequel coulissent des éléments convoyeurs sur lesquels sont accrochés des produits à transporter, ce rail de guidage étant associé à une chaîne motrice disposée à côté dudit rail et coopérant avec lesdits éléments convoyeurs, pour entraîner ceux-ci en mouvement le long dudit rail de guidage, cette chaîne motrice étant entraînée linéairement par l'intermédiaire de moyens moteurs.

Jusqu'à présent, cependant, de telles chaînes motrices étaient associées à des éléments poussoirs répartis régulièrement sur toute la longueur de la chaîne, lesdits éléments poussoirs venant appuyer sur des montures des éléments convoyeurs pour entraîner ceux-ci en mouvement dans leur rail de guidage. Or, de tels dispositifs de transport ne permettent pas un contrôle très fin du déplacement des éléments convoyeurs. Il apparaît, notamment, qu'il n'est pas possible, avec de tels dispositifs, d'obtenir un arrêt immédiat des éléments convoyeurs ou un arrêt desdits éléments convoyeurs avec un positionnement précis lesdits éléments convoyeurs pouvant poursuivre sur leur lancée, alors que la chaîne motrice et les éléments poussoirs sont à l'arrêt. Il était donc impossible d'effectuer des mouvements précis avec de tels dispositifs.

En outre, il arrive aussi parfois, qu'au moment où un élément convoyeur s'engage dans son rail de guidage en traversant une ouverture d'engagement, cet élément convoyeur vienne se bloquer contre son élément poussoir, notamment lorsque ledit engagement intervient au moment du passage d'un élément poussoir au niveau de ladite ouverture d'engagement.

Un but de la présente invention est de pallier ces inconvénients en proposant un dispositif dans lequel la chaîne d'entraînement et l'élément convoyeur sont solidaires l'un de l'autre en mouvement, de telle sorte qu'un arrêt de la chaîne provoque instantanément aussi l'arrêt des éléments convoyeurs. Il est clair, qu'une telle solution permet effectivement une meilleure précision dans la commande du déplacement des éléments à transporter.

En outre, l'invention propose aussi un dispositif dans lequel la coopération entre la chaîne motrice et l'élément convoyeur est obtenue par engrainement d'une denture dont est muni ledit élément convoyeur avec des maillons de ladite chaîne, de sorte que l'engagement d'un élément convoyeur se fait par simple présentation de celui-ci au niveau de la chaîne de convoyage, la denture dudit élément s'ajustant d'elle-même sur les maillons de la chaîne.

Par ailleurs, un autre but de la présente invention est de proposer un dispositif de transport du type précité qui puisse se monter et s'adapter facilement pour tous les types d'installations. A cet effet, elle propose, notamment, de disposer le rail de guidage et la chaîne motrice dans une même gaine, que l'on peut facilement accrocher, par exemple, à un plafond.

La présente invention a donc pour objet un dispositif de transport comportant au moins un élément convoyeur se déplaçant selon un circuit déterminé, par coulissement d'une de ses parties dans un rail de guidage primaire, ledit élément convoyeur étant entraîné dans son mouvement par l'intermédiaire d'au moins une chaîne comportant une partie retour et une partie d'entraînement disposée, au moins partiellement, le long et à côté dudit rail de guidage, ladite chaîne étant actionnée en circuit fermé par des moyens moteurs, caractérisé par le fait que ladite chaîne est une chaine à maillons, l'élément convoyeur étant muni d'une denture, qui engrène avec les maillons de ladite chaîne et solidarise, en déplacement, ladite chaîne et ledit élément convoyeur.

Avantageusement, la partie d'entraînement d'une chaîne est disposée, au moins partiellement, dans un rail de guidage secondaire d'entraînement. Par ailleurs, la partie retour d'une chaîne peut être disposée, au moins partiellement, dans un rail de guidage secondaire de retour. Le dispositif peut, notamment, comporter une gaine comprenant intérieurement un rail de guidage primaire juxtaposé à un rail de guidage secondaire d'entraînement et à un rail de guidage secondaire de retour, ledit rail de guidage primaire et ledit rail de guidage secondaire d'entraînement étant reliés dans leur longueur par un évidement linéaire dans lequel se déplace la partie de l'élément convoyeur qui engraine avec les maillons de la chaîne.

De façon préférentielle, le rail de guidage secondaire d'entraînement est compris entre le rail de guidage primaire et le rail de guidage secondaire de retour. La gaine peut comporter, sur sa longueur, un évidement destiné au passage de câbles, notamment électriques ou pneumatiques. La gaîne peut être un profilé muni linéairement d'évidements qui servent de rail de guidage primaire et de rails de guidage secondaires. La gaine peut être réalisée alors, au moins partiellement, en un matériau plastique.

De façon préférentielle, la gaîne est suspendue par points à un support grâce à des tiges filetées munies de vis et d'écrous, dont les bordures coopèrent avec des rebords de fixation solidaires de ladite gaine. Les rebords de fixation de la gaine peuvent être deux secteurs cylindriques disposés en vis-à-vis, une vis traversant ces deux secteurs et coopérant avec deux écrous dont les bordures s'appuient respectivement sur chacun desdits secteurs.

De façon avantageuse encore, chaque maillon d'une chaîne est défini par deux flans latéraux parallèles reliés respectivement aux deux flans d'un maillon adjacent par un axe portant trois cylindres coaxiaux pouvant pivoter autour dudit axe, l'un des cylindres étant compris entre les deux flans et les deux autres étant disposés à l'extérieur des deux flans, de part et d'autre de la chaîne, les cylindres disposés entre les flans des maillons engrènant avec la denture d'un élément convoyeur, les cylindres latéraux roulant sur la paroi d'un rail de guidage secondaire dans lesquels ils sont disposés. Un élément convoyeur peut être supporté par des roulettes roulant sur une paroi du rail de guidage primaire.

Le dispositif peut aussi comporter plusieurs chaînes dont les parties d'entraînement sont disposées dans le prolongement les unes des autres, lesdites chaînes pouvant être actionnées à des vitesses différentes. Le dispositif peut encore comporter au moins une portion de rail de guidage secondaire qui n'est associée à aucune chaîne.

De façon avantageuse encore, le rail de guidage primaire comporte au moins une ouverture d'engagement d'éléments convoyeurs. Un élément convoyeur peut comporter une tête plane de faible épaisseur portant la denture dudit élément convoyeur et ayant une section droite, dans le plan moyen de ladite denture, sensiblement arrondie. La denture d'un élément convoyeur peut comporter trois dents.

De préférence encore, le dispositif comporte deux rails de guidage primaire sensiblement juxtaposés et associés à une extrémité commune à un pignon sur lequel engraîne une chaîne associée communément aux deux rails de guidage primaire, ledit pignon étant lui-même entouré tangentiellement par un rail de guidage reliant l'un à l'autre lesdits rails de guidage primaire et dans lequel le (ou les) élément(s) convoyeur(s) sont destinés à coulisser avec engrènement de leur denture avec la chaîne.

Pour mieux faire comprendre l'invention, on va en décrire, ci-après, à titre purement illustratif et non limitatif, un mode de réalisation représenté sur le dessin annexé.

Sur ce dessin :
- la figure 1 est une vue en coupe transversale d'un dispositif de transport conforme à l'invention, cette coupe étant réalisée selon le plan I-I de la figure 2 ;
- la figure 2 est une vue en coupe partielle, selon la ligne II-II de la figure 1, représentant en détail un élément convoyeur du dispositif de transport de la figure 1 ;
- la figure 3 est une vue en coupe partielle, dans un plan parallèle au plan de coupe de la figure 1, du dispositif de transport de ladite figure 1, le plan de coupe étant placé au droit d'un support de suspension ;
- la figure 4 est une vue en coupe selon la ligne IV-IV de la figure 3 ;
- la figure 5 est une vue latérale, avec arraché partiel, d'un détail d'un pignon de retour de chaine du dispositif de la figure 1 ;
- la figure 6 est une vue latérale d'une partie d'un réseau réalisé à l'aide d'un dispositif conforme à l'invention.

On voit sur ce dessin qu'un dispositif de transport conforme à l'invention comporte essentiellement une gaine principale 1 allongée, comportant en son intérieur trois évidements la traversant dans toute sa longueur et disposés les uns au-dessus des autres, ces trois évidements servant, l'un, référencé par 2 de rail de guidage primaire, les deux autres, référencés par 3 et 4, de rails secondaires destinés à contenir une chaîne à maillons 5 fermée sur elle-même pour former une boucle et portée, aux deux extrémités de ladite gaine, par des roues, ladite chaîne 5 étant entraînée dans son mouvement par un moyen moteur, tel qu'un moteur électrique.

La gaine 1 comporte deux joues latérales 6 et 7 profilées en un matériau plastique, qui peut être du polyéthylène, ces deux joues 6 et 7 par leur profil intérieur délimitant entre elles le rail de guidage primaire 2 et les rails secondaires 3 et 4. Ces deux joues 6 et 7 sont disposées entre deux bandes de tôle 8 bordant leurs parois extérieures et les maintenant l'une sur l'autre grâce à des boulons 32 répartis régulièrement de la gaine 1, leur écartement étant assuré par l'intermédiaire d'entretoises 9 et 10 disposées, elles aussi, régulièrement sur toute la longueur de la gaine 1, les unes 9, entre les deux rails secondaires, les autres référencées par 10 au-delà du rail secondaire le plus éloigné du rail de guidage primaire 2. Au-dessus desdites joues 6 et 7, la gaine 1 comporte, sur toute sa longueur, un tube carré 11, qui s'insère à force entre les deux bandes de tôle 8 et dans lequel peuvent être passés des câbles électriques ou des conduites pneumatiques 12 servant au fonctionnement du dispositif et, par exemple, à l'alimentation électrique du moteur mettant en mouvement la chaîne 5.

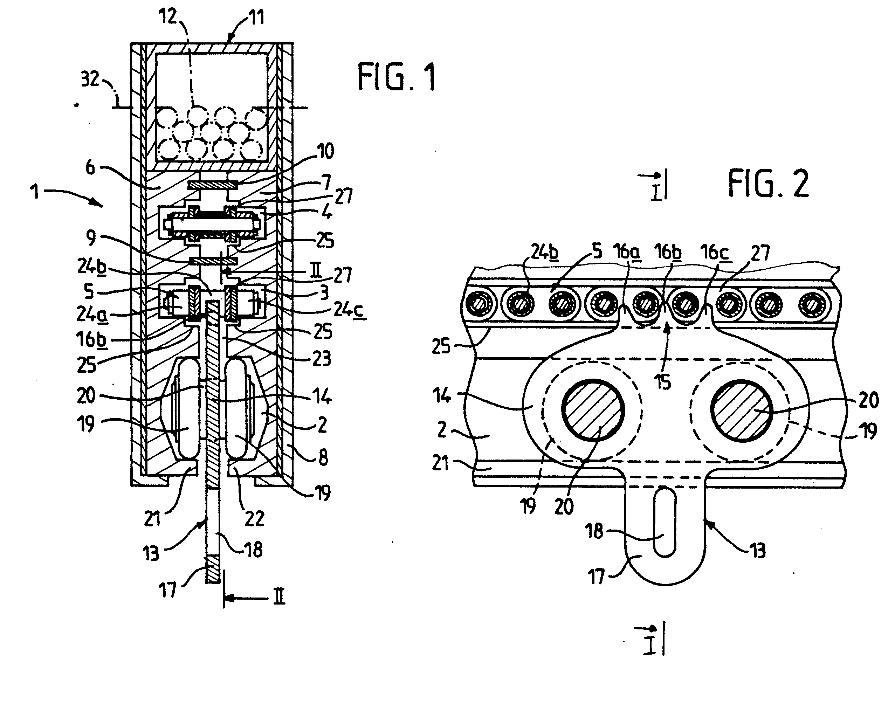

Comme on peut le voir plus particulièrement sur les figures 1 et 2, un élément convoyeur 13 comporte une tête 14, qui est une plaque de petite épaisseur, ladite épaisseur étant légèrement inférieure à l'écartement minimum entre les deux joues 6 et 7 au niveau du rail de guidage primaire 2. Cette tête 14 a un contour partiellement elliptique, partiellement rectiligne ; sa joue de bordure elliptique porte une denture 15 symétrique par rapport au petit axe de la zone elliptique du contour et comportant trois dents, 16a, 16b, et 16c. La dent médiane 16b sert essentiellement à assurer la solidarisation entre l'élément convoyeur 13 et la chaîne d'entraînement 5 pendant le mouvement dudit élément convoyeur 13 dans son rail de guidage primaire 2. Les dents 16a et 16c latérales servent, essentiellement à assurer respectivement l'engagement initial et le désengagement final de l'élément convoyeur 13 avec la chaîne 5.

Du côté opposé à la denture 15, la bordure de la tête 14 dans son épaisseur est rectiligne et parallèle au grand axe de la zone elliptique du contour de ladite tête 14. La tête 14 est prolongée, sur cette zone rectiligne par un élément d'accrochage 17 sensiblement rectangulaire et dont la ligne longitudinale moyenne, est situé sur le petit axe de la zone elliptique du contour, son extrémité opposée à la bordure de la tête 14 étant délimitée par un demi-cercle. Cet élément d'accrochage 17 est traversé, selon sa ligne longitudinale moyenne, par un trou oblong 18, destiné à permettre l'accrochage d'éléments à transporter, par exemple d'une pince ou analogue. Chacune des deux faces de la tête 14 est munie de deux roulettes identiques 19 et 20, ces roulettes étant montées à pivotement selon des axes perpendiculaires au plan des faces de la tête 14, symétriquement, de chaque côté par rapport au petit axe de la zone elliptique de ladite tête 14, le diamètre de ces roulettes 19 et 20 étant tel que la projection desdites roulettes sur les faces de la tête 14 est totalement comprise à l'intérieur du contour de ladite tête.

Ces roulettes 19 et 20 sont destinées à venir en appui et à rouler sur des rebords 21 et 22, qui terminent respectivement les joues 6 et 7, à leurs extrémités opposées au tube 11, lesdits rebords 21 et 22 constituant le fond du rail de guidage primaire 2 et étant dans un plan sensiblement perpendiculaire au plan des têtes 14, lorsque celles-ci sont en place dans le rail de guidage primaire 2. Le rail de guidage primaire 2 a une section droite sensiblement hexagonale ; il est prolongé à son extrémité opposée auxdits rebords 21 et 22, par un évidement 23 réalisé sur toute la longueur de la gaine 1, cet évidement 23 permettant la communication entre le rail de guidage primaire 2 et le rail de guidage secondaire d'entraînement 3, qui lui est juxtaposé et ayant une épaisseur sensiblement identique à la distance qui sépare les rebords 21 et 22 ; l'évidement 23 est, en outre, centré sur le plan longitudinal médian de la gaine 1. Dans cet évidement 23 coulisse la partie de la tête 14 située entre la denture 15 et les roulettes 19 et 20, la denture 15 se retrouvant au niveau de la chaîne 5 et engrenant avec les maillons de ladite chaîne.

La chaîne 5 comporte des séries de trois cylindres coaxiaux, 24a, 24b, 24c, lesdites séries étant reliées deux à deux par des flans d'articulation pour constituer les maillons de la chaîne, les cylindres latéraux 24a et 24c roulent sur le fond du rail de guidage secondaire 3, ledit rail secondaire 3 étant défini par un évidement sensiblement parallélépipédique;

les cylindres médians 24b sont espacés les uns des autres et sont destinés à engrener avec la denture 15 de la tête 14. Chaque maillon d'une chaîne 5 est défini par deux flans latéraux 27 parallèles, reliés respectivement aux deux flans d'un maillon adjacent par l'axe d'une série de trois cylindres 24a, 24b, 24c, lesdits flans 27 étant disposés de chaque côté du cylindre médian 24b, perpendiculairement à son axe, les cylindres latéraux 24a et 24b se trouvant à l'extérieur des maillons.

Chacun des deux rails secondaires 3 et 4 est muni d'évidements 25 et 26 respectivement, dans lesquels sont destinés à passer des flans d'articulation 27 de la chaîne 5.

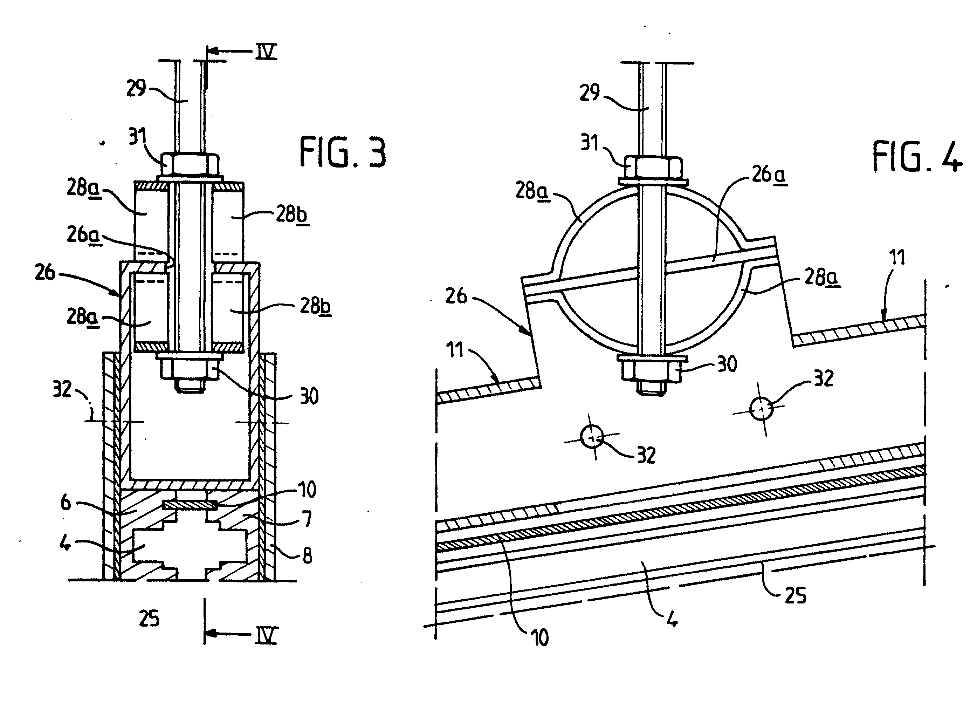

Ainsi qu'on peut le voir plus spécialement sur les figures 3 et 4, les parois du tube 11, qui sont parallèles aux bandes de tôle 8, sont surélevées au droit des supports d'accrochage du dispositif. Dans chacune de ces zones, l'âme supérieure du tube 11 est supprimée entre les deux parois latérales surélevées 26. Les parois surélevées 26 comportent un retour en équerre 26a le long de leurs bordures supérieures. De part et d'autre de chacun de ces deux retours en équerre 26a, on a disposé un élément en forme de demi-cercle 28a, 28b, ces éléments étant soudés à leurs extrémités sur lesdits retours en équerre 26a. Entre les éléments 28a, 28b subsiste un espace où l'on fait passer une tige filetée 29, qui est accrochée au plafond supportant le dispositif. Deux écrous 30, 31 sont vissés sur la tige filetée 29 et les éléments 28a, 28b sont enserrés entre ces deux écrous. Ce système de fixation peut être utilisé quelle que soit l'inclinaison de la gaine 1 par rapport au plafond. Un tel système d'accrochage permet en particulier, de réaliser un réseau de rails de guidage comportant des changements de pentes par rapport à l'horizontal.

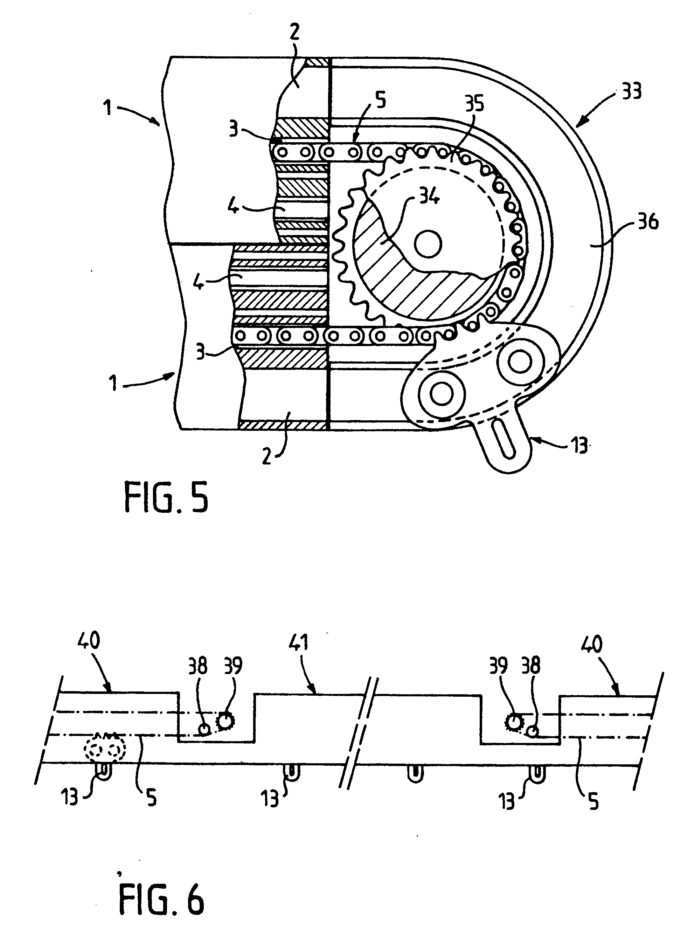

On a représenté, sur la figure 5, un dispositif référencé par 33 dans son ensemble permettant d'obtenir un retournement rapide et peu encombrant des éléments convoyeurs 13. Un tel dispositif de retournement 33 peut, par exemple, être utilisé pour renvoyer les éléments convoyeurs de la fin de la chaîne au début. Ce dispositif 33 est constitué essentiellement d'un pignon 34 comportant deux roues dentées 35 identiques, montées sur un même axe en vis-à-vis l'une de l'autre et dont les dentures sont destinées à coopérer respectivement avec les cylindres latéraux 24a et 24c de la chaîne 5, ces deux roues 35 étant séparées l'une de l'autre par un espacement dans lequel se loge la partie intérieure de la chaîne 5, à savoir les cylindres 24b et les flancs 27. Ce pignon 34 est disposé aux extrémités de deux gaines 1 juxtaposées l'une à l'autre, leur rail de guidage primaire 2 étant disposé de façon que les dentures 15 des éléments convoyeurs se présentent sensiblement tangentiellement par rapport aux roues dudit pignon 34. Le pignon 34 est entouré, dans le prolongement de chacun desdits rails de guidage 2, par un rail de guidage 36 destiné à conduire les éléments convoyeurs 13 d'une gaine 1 à l'autre, lesdites gaines 1 étant associées à une même chaîne 5 passant d'un rail de guidage secondaire 3 à l'autre après enroulement sur le pignon 34, les rails de guidage secondaires 4 n'étant munis d'aucune chaîne 5.

Comme on peut le voir sur la figure 6, il est possible, à l'aide d'un dispositif de transport du type qui vient d'être décrit de réaliser un réseau de transport comportant plusieurs portions de gaine 1 dans le prolongement les unes des autres, associées à des chaînes distinctes, ce qui permet de réaliser un réseau comportant des portions sur lesquelles les éléments convoyeurs sont animés de vitesses différentes, certaines portions du réseau pouvant même n'être associées à aucune chaîne de transport, de façon à réaliser ainsi, par exemple, des stations de contrôle des éléments à transporter.

Les gaines 1 proposées par l'invention présentent, en particulier, l'avantage de pouvoir être facilement découpées au niveau de leurs rails de guidage secondaires 3 et 4, de sorte qu'il est possible de réaliser dans la longueur de ladite gaine, des évidements 37 au niveau desdits rails secondaires 3 et 4, dans lesquels se placent des roulettes 38 et des roues d'entraînement 39 sur lesquels passent les chaînes 5.

## Revendications

1 - Dispositif de transport, comportant au moins un élément convoyeur (13) se déplaçant selon un circuit déterminé, par coulissement d'une de ses parties (14) dans un rail de guidage primaire (2), ledit élément convoyeur étant entraîné dans son mouvement par l'intermédiaire d'au moins une chaîne motrice (5) comportant une partie d'entraînement et une partie retour, la partie d'entraînement étant disposée, au moins partiellement, le long et à côté dudit rail de guidage primaire (2), ladite chaine étant une chaîne à maillons et étant actionnée en circuit fermé par des moyens moteurs (39), l'élément convoyeur (13) étant muni d'une denture (15), qui engrène avec les maillons de ladite chaîne (5) et solidarise en déplacement ladite chaîne (5) et ledit élément convoyeur (13), caractérisé par le fait que la partie d'entraînement d'une chaîne (5) est disposée, au moins partiellement, dans un rail de guidage secondaire d'entraînement (3) et que la partie retour d'une chaîne (5) est disposée, au moins partiellement, dans un rail de guidage secondaire de retour (4), le dispositif comportant une gaine (1) qui comprend intérieurement un rail de guidage primaire (2) juxtaposé aux rails de guidage secondaires d'entraînement (3) et de retour (4), ledit rail de guidage primaire (2) et ledit rail de guidage secondaire d'entraînement (3) étant reliés dans leur longueur par un évidement linéaire (23) dans lequel se déplace la partie (14) de l'élément convoyeur (13), qui porte la denture (15) de celui-ci.

2 - Dispositif selon la revendication 1, caractérisé par le fait que le rail de guidage secondaire d'entraînement (3) est compris entre, d'un côté, le rail de guidage primaire (2) et de l'autre côté, le rail de guidage secondaire de retour (4).

3 - Dispositif selon l'une des revendications 1 ou 2, caractérisé par le fait que la gaine (1) comporte un logement (11) sur sa longueur destiné au passage de câbles (12).

4 - Dispositif selon l'une des revendications 1 à 3, caractérisé par le fait que la gaine est un profilé muni, dans sa longueur, d'évidements (2, 3, 4) qui servent de rail de guidage primaire et de rails de guidage secondaires.

5 - Dispositif selon la revendication 4, caractérisé par le fait que la gaine (1) est réalisée, au moins partiellement, en matériau plastique.

6 - Dispositif selon l'une des revendications 1 à 5, caractérisé par le fait que la gaine (1) est suspendue par points à un support grâce à des tiges (29) filetées munies d'écrous (30, 31), les bordures desdits écrous (30, 31) s'appuyant sur des rebords de fixation (28a, 28b) solidaires de ladite gaine (1).

7 - Dispositif selon la revendication 6, caractérisé par le fait que les rebords de fixation (28a, 28b) de la gaine (1) sont deux secteurs cylindriques disposés en vis-à-vis, une tige filetée (29) traversant ces deux secteurs et coopérant avec deux écrous (30, 31) dont les bordures s'appuient respectivement sur chacun desdits secteurs.

8 - Dispositif selon l'une des revendications 1 à 7, caractérisé par le fait que chaque maillon d'une chaîne est défini par deux flans (27) latéraux parallèles reliés respectivement aux deux flans (27) d'un maillon adjacent par un axe portant trois cylindres coaxiaux (24a, 24b, 24c) pouvant pivoter autour dudit axe, l'un (24b) des cylindres étant compris entre les deux flans (27) et les deux autres (24a, 24c) étant disposés à l'extérieur des deux flans (27), de part et d'autre de la chaîne, les cylindres (24b) disposés entre les flans (27) des maillons engrenant avec la denture (15) d'un élément convoyeur (13), les cylindres latéraux (24a, 24c) roulant sur la paroi d'un rail de guidage secondaire (3, 4).

9 - Dispositif selon l'une des revendications 1 à 8, caractérisé par le fait qu'un élément convoyeur (13) est supporté par des roulettes (19) roulant sur une paroi du rail de guidage primaire (2).

10 - Dispositif selon l'une des revendications 1 à 9, caractérisé par le fait qu'il comporte plusieurs chaînes (5) dont les parties d'entraînement sont disposées dans le prolongement les unes des autres, lesdites chaînes (5) pouvant être actionnées à des vitesses différentes.

11 - Dispositif selon l'une des revendications 1 à 10, caractérisé par le fait qu'il comporte au moins une portion de rail de guidage primaire (2) qui n'est associée à aucune chaîne (5).

12 - Dispositif selon l'une des revendications 1 à 11, caractérisé par le fait que le rail de guidage primaire (2) comporte au moins une ouverture d'engagement d'élément convoyeur.

13 - Dispositif selon l'une des revendications 1 à 12, caractérisé par le fait qu'un élément convoyeur (13) comporte une tête plane (14) de faible épaisseur portant la denture (15) dudit élément convoyeur (13) et ayant un contour, dans le plan moyen de ladite denture, sans angle vif.

14 - Dispositif selon l'une des revendications 1 à 13, caractérisé par le fait que la denture (15) d'un élément convoyeur comporte trois dents (16a, 16b, 16c).

15 - Dispositif selon l'une des revendications 1 à 14, caractérisé par le fait qu'il comporte deux rails de guidage primaire (1) sensiblement juxtaposés et associés à une extrémité commune à un pignon (34) sur lequel engrène une chaîne (5) associée communément aux deux rails de guidage primaire (1), ledit pignon étant lui-même entouré tangentiellement par un rail de guidage (36) reliant l'un à l'autre lesdits rails de guidage primaire (1) et dans lequel le (ou les) élément(s) convoyeur(s) (13) sont destinés à coulisser avec engrènement de leur denture (15) avec la chaîne (5).

FIG. 2

FIG. 1

FIG. 4

FIG. 3

FIG. 5

FIG. 6

# RAPPORT DE RECHERCHE EUROPEENNE

Numero de la demande

EP    90 40 3322

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3110833 (GUSTAV GEORG VEITH)<br>* page 9, lignes 1 - 10; figures 1-6 *<br>--- | 1, 9, 11 | B61B3/00<br>E01B25/24<br>B65G35/06 |
| A | EP-A-0164109 (GÄRTNER)<br>* page 6, ligne 6 - page 7, ligne 21; figures 1-3 *<br>--- | 1, 5, 11 | |
| A | BE-A-634630 (FERRAND)<br>* page 4, ligne 5 - page 5, ligne 29; figures 1-7 *<br>--- | 1, 9,<br>12, 13 | |
| A | DE-U-1912044 (DEYLE ELEKTROBAU)<br>* page 1, ligne 1 - page 2, ligne 6; figure 1 *<br>--- | 3, 6 | |
| A | FR-A-1131953 (DEMAG-ZUG)<br>* page 1, colonne de droite, lignes 5 - 17; figures 1, 2 *<br>--- | 6 | |
| A | US-A-1972931 (HADDLESAY)<br>* page 1, lignes 47 - 49; figure 4 *<br>----- | 1, 8 | |

DOMAINES TECHNIQUES
RECHERCHES (Int. Cl.5)

B61B
E01B
B65G

Le présent rapport a été établi pour toutes les revendications

| Lieu de la recherche | Date d'achèvement de la recherche | Examinateur |
|---|---|---|
| BERLIN ʼ | 18 FEVRIER 1991 | SIMON, J |